(19) Europäisches Patentamt
European Patent Office
Office européen des brevets

(11) EP 1 585 625 B1

(12) EUROPÄISCHE PATENTSCHRIFT

(45) Veröffentlichungstag und Bekanntmachung des Hinweises auf die Patenterteilung:
22.04.2015 Patentblatt 2015/17

(51) Int Cl.:
B29C 47/16 (2006.01)   B29C 47/92 (2006.01)
G01B 15/02 (2006.01)

(21) Anmeldenummer: 03782369.7

(22) Anmeldetag: 09.12.2003

(86) Internationale Anmeldenummer:
PCT/EP2003/014056

(87) Internationale Veröffentlichungsnummer:
WO 2004/060634 (22.07.2004 Gazette 2004/30)

(54) **VERFAHREN ZUR REGELUNG DER DICKE EXTRUDIERTER FOLIE**

METHOD FOR CONTROL OF THE THICKNESS OF EXTRUDED FILM

PROCEDE DE REGULATION DE L'EPAISSEUR DE PELLICULES EXTRUDEES

(84) Benannte Vertragsstaaten:
AT BE BG CH CY CZ DE DK EE ES FI FR GB GR HU IE IT LI LU MC NL PT RO SE SI SK TR

(30) Priorität: 06.01.2003 DE 10300374

(43) Veröffentlichungstag der Anmeldung:
19.10.2005 Patentblatt 2005/42

(73) Patentinhaber: Windmöller & Hölscher KG
49525 Lengerich (DE)

(72) Erfinder:
• KÖNIG, Lothar
49492 Westerkappeln (DE)
• TROMMELEN, Bartholomeus
48599 Gronau (DE)

(56) Entgegenhaltungen:
EP-A- 1 319 492   WO-A-02/24434
US-A- 3 610 899   US-A- 4 000 402
US-A- 5 397 514

**Beschreibung**

Die Erfindung betrifft ein Verfahren zur Regelung der Dicke extrudierter Folie.

Derartige Verfahren werden sowohl bei der Flachfolien- als auch bei der Blasfolianextrusion eingesetzt.

Sie umfassen bei modernen Extrusionsanlagen in der Regel folgende Verfahrensschritte, welche auch im Oberbegriff des Anspruchs 1 angegeben und auch aus der EP 1 319 492 bekannt sind:

- die Messung des Dickenprofils gerade extrudierter Folie mit Hilfe einer Dickenmesssonde, welche im wesentlichen quer (x) zur Förderrichtung (z) der extrudierten Folie entlang ihrer Oberfläche bewegt wird und pro Messzyklus (MZ) ein Dickenprofil (P) der Folie zumindest über Teile der Ausdehnung der Folie quer (x) zu ihrer Förderrichtung (z) aufzeichnet,
- die Übermittlung der Messwerte an eine Steuereinheit,
- das Speichern der den Dickenprofilen zugrundeliegenden Messwerten in einer Speichervorrichtung,
- das Bereitstellen statistischer Werte zu der Foliendicke (5) durch eine Rechenvorrichtung (14), wobei die Rechenvorrichtung (14) hierbei Messwerte oder von Messwerten abgeleitete Informationen aus einer bestimmten Anzahl (N) von Messzyklen (MZ) berücksichtigt und gegebenenfalls Messwerte aus jüngeren und älteren Messzyklen mit unterschiedlichen Wichtungsfaktoren versieht,
- die Ermittlung der Abweichungen der statistischen Werte zu der Foliendicke von einem Sollwert,
- das Generieren von Steuerbefehlen an Mittel zum Beeinflussen der Foliendicke

Die oben skizzierten Messeinrichtungen sind druckschriftlich bekannt. So zeigt die DE 40 09 982 A1 einen kapazitiven Sensor zur Messung der Dicke der Wandung eines Folienschlauchs. Es werden jedoch auch anderer Messprinzipien zur Messung der Foliendicke angewandt. Als brauchbar haben sich beispielsweise auch die Messung des Transmissionsverhaltens von Beta-, Gamma-, Röntgen- und Infrarotstrahlung erwiesen. Bei Blasfolienanlagen werden sie in aller Regel um den gerade extrudierten Folienschlauch herumgeführt. Bei Flachfolienanlagen traversiert der Sensor über die Breite der extrudierten Flachfolie.

Hierbei dient das Entwickeln statistischer Aussagen zur zeitlichen Entwicklung der Foliendicke durch eine Rechenvorrichtung der Vermeidung eines Übersteuerns oder Überschwingens der Regelung. Zu diesem Zweck werden von der Rechenvorrichtung Messwerte einer bestimmten Anzahl von Messzyklen berücksichtigt. Die statistischen Werte bestehen in der Regel aus einer Mittelwert- oder Meridianbildung. Es können jedoch auch andere statistische Größen ermittelt werden.

Darüber hinaus ist es möglich, der Recheneinheit, statt der Messwerte selbst, von den Messwerten abgeleitete Informationen zur Verfügung zu stellen. Diese von Messwerten abgeleiteten Informationen können statistische Werte sein, die unter Berücksichtigung der neuesten Messwerte aktualisierte statistische Werte ergeben. So kann beispielsweise eine Mittelwertbildung vorgenommen werden, indem der Mittelwert aus den letzten n-Messungen der Recheneinheit zugeführt wird. Die Recheneinheit muss dann nur noch den aktuellen Messwert bei der Bildung des aktualisierten Mittelwerts berücksichtigen.

Von Messwerten abgeleitete Informationen können jedoch auch in aufgezeichneten "älteren" Steuerbefehlen bestehen, welche vor dem Hintergrund aktueller Messwerte angepasst werden.

Bei der Bildung der statistischen Werte werden Messwerte aus einer bestimmten Anzahl von Messzyklen verwendet. Oft werden Messwerte aus einer bestimmten Anzahl von Messzyklen - beispielsweise die N letzten Messzyklen - verwendet. Bleibt man beim Beispiel der Mittelwertbildung so muss man dann lediglich die Summe über die Messwerte an einer bestimmten Position in x-Richtung bilden und diese durch N teilen um den Mittelwert zu erhalten.

Darüber hinaus ist es möglich, den Beitrag der Messwerte aus unterschiedlichen Messzyklen bei der Bildung der statistischen Werte unterschiedlich festzulegen. So kann beispielsweise den jüngeren, gerade erst aufgezeichneten Messwerten größeres Gewicht bei der Bildung der statistischen Werte zu gegeben werden als den älteren.

Diese unterschiedliche Wichtung der Messwerte - kurz $MW_n$ - kann mit Hilfe von Wichtungsfaktoren - hier $k_n$ - durchgeführt werden. Bei einer der Mittelwertbildung ähnlichen statistischen Funktion würde die Summenbildung dann folgendermaßen vonstatten gehen:

$$\Sigma = k_1 MW_1 + k_2 MW_2 + \ldots + k_n MW_n$$

Bei diesem Beispiel würde diese Summe jedoch nicht bloß durch N, sondern durch die Summe

$$\Sigma = k_1 + k_2 + \ldots + k_n$$

geteilt werden, um den dem Mittelwert ähnlichen statistischen Wert zu erhalten. Die durch die Recheneinheit von den Messwerten abgeleiteten Informationen beziehungsweise statistischen Werte werden einer Steuereinheit zugeführt, welche Mittel zum Beeinflussen der Foliendicke steuert. Die Foliendicke kann auf verschiedene Weise beeinflusst werden. So kann beispielsweise die Breite des Düsenspaltes oder des Düsenringes abschnittsweise variiert werden, um so den Durchfluss der Schmelze an den gewünschten Stellen erhöhen oder verringern zu können.

Die Steuereinheit kann aber auch die Temperatur der Schmelze über Heiz- und/oder Kühlmittel beeinflussen. Mit der Temperatur kann gezielt die Viskosität der Schmelze gesteuert werden. Ist die Viskosität einer Schmelze an einem Ort höher als an anderen Orten, so kann die Schmelze an diesem Ort stärker "zerfließen", was eine geringere Foliendicke an diesem Ort zur Folge hat.

Die Dicke der Folie kann ebenso durch stellenweises Recken variiert werden. Hierbei wird die Eigenschaft der Folie ausgenutzt, dass sich die bereits verfestigte, aber noch nicht vollständig erkaltete Folie noch recken lässt. Die stärker gereckten Folienbereiche weisen anschließend eine geringere Dicke auf als die weniger stark gereckten Bereiche. Die zum Recken notwendige Kraft wird häufig durch Blasluft zur Verfügung gestellt. Die Steuereinheit steuert in diesem Fall bereichsweise den Volumenstrom der Blasluft.

Die dargestellten Messverfahren haben sich in der Praxis insbesondere im Dauerbetrieb bewährt. Da in jüngster Zeit jedoch ein Trend zu kleineren Auftragsgrößen und damit zu einer häufigeren Umstellung des Folienmaterials zu verzeichnen ist, wird dem Regelverhalten zu Beginn des Extrusionsprozesses immer größere Bedeutung beigemessen.

Mit Regelverfahren nach dem Stand der Technik wird jedoch während einer nennenswerten Zeitspanne zu Beginn des Extrusionsprozesses Folienmaterial mit inakzeptablen Dickentoleranzen und damit Ausschuss produziert.

Daher ist es Aufgabe der vorliegenden Erfindung, nach Beginn des Extrusionsprozesses schneller die Dickenabweichungen der Folie zu senken.

Diese Aufgabe wird dadurch gelöst, dass

- die Rechenvorrichtung (14) während eines vorbestimmten Zeitraumes zu Beginn des Extrusionsprozesses den oder die jüngeren Messwerte bei der Bereitstellung der statistischen Werte im Verhältnis zu den älteren Messwerten stärker berücksichtigt als während des Normalbetriebs.

Durch die stärkere Berücksichtigung der jüngeren Messwerte lassen sich die Dickenabweichungen zu Beginn des Messprozesses senken. Die erfindungsgemäße stärkere Berücksichtung der jüngeren, später aufgenommenen Messwerte lässt sich vorteilhafterweise durch eine Senkung der Anzahl (N) der Messzyklen, aus denen Messwerte berücksichtigt werden und/oder die Änderung der Wichtungsfaktoren ($k_n$) gegenüber den im Normalbetrieb üblichen Werten erreichen.

Die Beibehaltung der starken Berücksichtigung der jüngeren, gerade gewonnenen Messwerte während des gesamten Betriebes erscheint jedoch unzweckmäßig, da sie die Regelung zu empfindlich für Schwankungen macht. Daher sollten die bereits mehrfach erwähnten statistischen Parameter (N und $k_n$) im Laufe des Extrusionsprozesses wieder auf die Werte des Normalbetriebs zurückgeführt werden.

Die dazu notwendige Steigerung der Anzahl der Messzyklen, aus denen Messwerte berücksichtigt werden und/oder die Änderung der Wichtungsfaktoren auf die im Normalbetrieb üblichen Werte erfolgt vorteihafterweise sukzessive innerhalb einer Mehrzahl von Messzyklen.

Auch eine zur Durchführung der erfindungsgemäßen Verfahren geeignete Vorrichtung ist Gegenstand dieser Anmeldung.

Ein Ausführungsbeispiel der Erfindung geht aus den Zeichnungen und der gegenständlichen Beschreibung hervor.

Die einzelnen Figuren zeigen:

Fig. 1    Seitenansicht einer erfindungsgemäßen Vorrichtung zum Herstellen von Folie nach dem erfindungsgemäßen Verfahren.

Fig. 2    Draufsicht auf die Vorrichtung aus Fig. 1

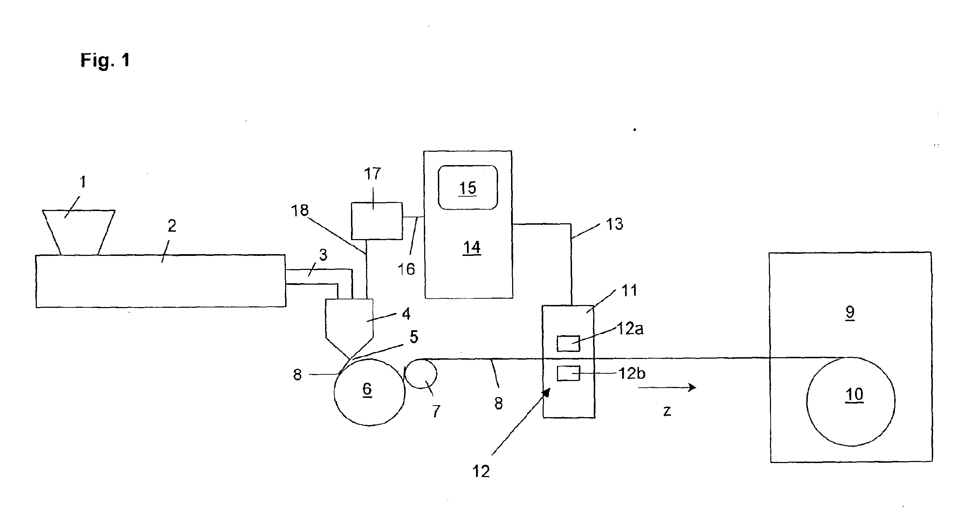

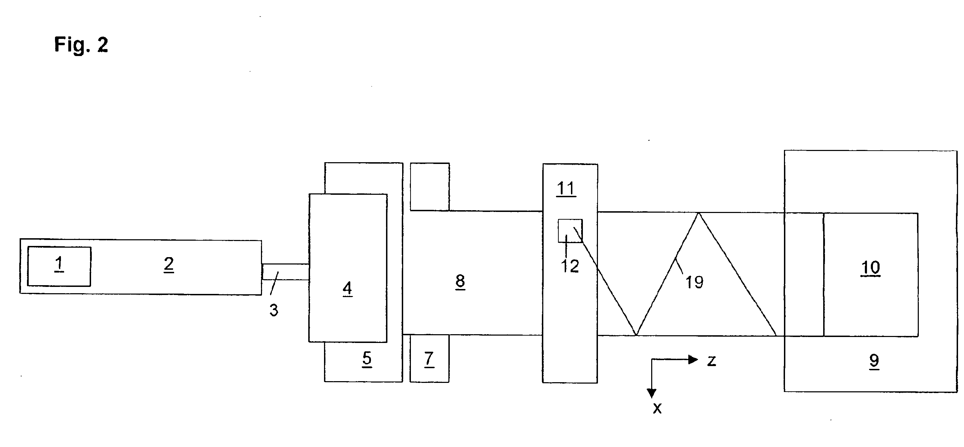

Fig. 1 und Fig. 2 zeigen eine Vorrichtung zum Herstellen von extrudierter Folie. Als Ausgangsmaterial zur Herstellung von Folien wird ein Granulat verwendet, das der Vorrichtung über den Fülltrichter 1 zugeführt wird. Von dort gelangt dieses in den Extruder 2, in dem das Granulat unter Anwendung von hohen Drücken zum Schmelzen gebracht wird. Diese Schmelze wird über die Leitung 3 der Breitschlitzdüse 4 zugeführt. Die Schmelze wird innerhalb der Breitschlitzdüse 4 im wesentlichen auf deren gesamte Breite verteilt. Durch den Düsenspalt 5 tritt die Schmelze aus und gelangt auf die Kühlwalze 6. Die Spaltbreite des Düsenspalts 5 kann auf nicht dargestellte Weise abschnittsweise verändert werden. Auf der Kühlwalze verfestigt sich die Schmelze und wird zur Folie 8. Diese Folie 8 umschlingt die Kühlwalze 6 zu einem großen Teil und wird dadurch stark abgekühlt. Über eine Umlenkwalze 7 wird die Folie 8 einer Wickelvorrichtung 9 zugeführt, wo sie zu einem Wickel 10 aufgewickelt wird.

Die Dicke der Folie 8 wird nach dem Passieren der Umlenkwalze 7 mit einer Dickenmessvorrichtung 11 vermessen. Die Dickenmessvorrichtung 11 umfasst die Dickenmesssonde 12, welche aus einem mit Sender 12a und einem Empfänger 12b besteht. Die Messwerte werden über eine Datenleitung 13 der Rechen- und Speichereinheit 14 zugeführt. Die Messwerte oder die daraus abgeleiteten Informationen können dem Maschinenbediener über den Monitor 15 zugänglich gemacht werden. Der Monitor 15 kann auch zur Eingabe von Parametern dienen. Gegebenenfalls kann hierzu auch ein anderes, nicht dargestelltes Eingabegerät verwendet werden. Die Rechen- und Speichereinheit 14 stellt über die Datenleitung 16 der Steuereinheit 17 Informationen zur Steuerung des Mittels zur Beeinflussung der Foliendicke zur Verfügung. Die Steuereinheit 17 ermittelt aus diesen Informationen Steuerbefehle und übermittelt diese über die Steuerleitung 18 an das Mittel zur Beeinflussung der Foliendicke. In der hier vorgestellten Ausführungsform der Erfindung dienen die Steuerbefehle der Variation der Spaltbreite des Düsenspalts 5.

Aus Fig. 2 ist der effektive Bahnverlauf 19 zu erkennen, den die Messköpfe 12 erzeugen, wenn sie sich mit gleichmäßiger Geschwindigkeit in Richtung (x) quer zur Förderrichtung (z) der Folie 8 bewegen. Zur Ermittlung eines vollständigen Dickenprofils der Folie 8 bewegen sich die Messköpfe 12 bis zu den Rändern der Folie 8.

| Bezugszeichenliste | |
|---|---|
| 1 | Fülltrichter |
| 2 | Extruder |
| 3 | Leitung |
| 4 | Breitschlitzdüse |
| 5 | Düsenspalt |
| 6 | Kühlwalze |
| 7 | Umlenkwalze |
| 8 | Folie |
| 9 | Wickelvorrichtung |
| 10 | Wickel |
| 11 | Dickenmessvorrichtung |
| 12 | Dickenmesssonde |
| 13 | Datenleitung |
| 14 | Rechen- und Speichereinheit |
| 15 | Monitor |
| 16 | Datenleitung |
| 17 | Steuereinheit |
| 18 | Steuerleitung |
| 19 | Effektiver Bahnverlauf |
| | |
| 12a | Sender der Dickenmesssonde |
| 12b | Empfänger der Dickenmesssonde |
| | |
| x | Bewegungsrichtung des Messkopfes 11 |
| z | Förderrichtung |

## Patentansprüche

1. Verfahren zur Regelung der Dicke extrudierter Folie, welches folgende Verfahrensmerkmale umfasst:

- die Messung des Dickenprofils gerade extrudierter Folie (8) mit Hilfe einer Dickenmesssonde (12), welche im wesentlichen quer (x) zur Förderrichtung (z) der extrudierten Folie (8) entlang ihrer Oberfläche bewegt wird und pro Messzyklus ein Dickenprofil der Folie (8) zumindest über Teile der Ausdehnung der Folie (8) quer (x) zu ihrer Förderrichtung (z) aufzeichnet,
- die Übermittlung der Messwerte an eine Steuereinheit (14,15,17)
- das Speichern der den Dickenprofilen zugrundeliegenden Messwerte in einer Speichervorrichtung (14),
- das Bereitstellen statistischer Werte zu der Foliendicke (5) durch eine Rechenvorrichtung (14), wobei die Rechenvorrichtung (14) hierbei Messwerte oder von Messwerten abgeleitete Informationen aus einer bestimmten Anzahl von Messzyklen berücksichtigt,
- die Ermittlung der Abweichungen der statistischen Warte zu der Foliendicke (5) von einem Sollwert,
- das Generieren von Steuerbefehlen an Mittel zum Beeinflussen der Foliendicke (5)

**dadurch gekennzeichnet, dass**

die Rechenvorrichtung (14) während eines vorbestimmten Zeitraumes zu Beginn des Extrusionsprozesses den oder die jüngeren Messwerte bei der Bereitstellung der statistischen Werte im Verhältnis zu den älteren Messwerten, welche zu einem früheren Zeitpunkt aufgenommen wurden als die jüngeren Messwerte, stärker berücksichtigt als während des Normalbetriebs, indem

• die Messwerte oder von Messwerten abgeleitete Informationen aus einer geringeren Anzahl von Messzyklen berücksichtigt als während des Normalbetriebs und/oder
• zumindest ein älterer Messwert mit einem kleineren Wichtungsfaktor versehen wird als im Normalbetrieb und/oder
• zumindest ein jüngerer Messwert mit einem größeren Wichtungsfaktor versehen wird als im Normalbetrieb.

2. Verfahren nach Anspruch 1
**dadurch gekennzeichnet, dass**

- die Anzahl von Messzyklen und/oder
- die Wichtungsfaktoren

nach dem Beginn des Extrusionsprozesses schrittweise an die im Normalbetrieb verwendete Anzahl und/oder die im Normalbetrieb verwendeten Wichtungsfaktoren angenähert werden.


## Revendications

1. Procédé de régulation de l'épaisseur de pellicules extrudées, lequel comprend les caractéristiques de procédé suivantes :

- la mesure du profil d'épaisseur d'une pellicule (8) extrudée linéairement à l'aide d'une sonde de mesure d'épaisseur (12), qui est déplacée essentiellement transversalement (x) à la direction de transport (z) de la pellicule (8) extrudée le long de sa surface et qui enregistre, pour chaque cycle de mesure, un profil d'épaisseur de la pellicule (8) au moins sur des parties de l'étendue de la pellicule (8) transversalement (x) à sa direction de transport (z),
- la transmission des valeurs de mesure à une unité de commande (14, 15, 17),
- la mémorisation des valeurs de mesure à la base des profils d'épaisseur dans un dispositif de mémoire (14),
- la fourniture de valeurs statistiques relatives à l'épaisseur (5) de la pellicule par un dispositif de calcul (14), le dispositif de calcul (14) tenant compte dans ce cas de valeurs de mesure ou d'informations dérivées de valeurs de mesure à partir d'un nombre déterminé de cycles de mesure,
- la détermination des écarts des valeurs statistiques relatives à l'épaisseur (5) de la pellicule par rapport à une valeur de consigne,
- la génération d'ordres de commande pour des moyens destinés à influencer l'épaisseur (5) de la pellicule,

**caractérisé en ce que**

le dispositif de calcul (14), pendant un intervalle de temps prédéterminé au début du processus d'extrusion, tient compte, dans une plus large mesure que pendant le fonctionnement normal, de la valeur de mesure ou des valeurs de mesure plus récentes lors de la fourniture des valeurs statistiques par rapport aux valeurs de mesure plus anciennes qui ont été reçues à un instant antérieur à celui auquel les valeurs de mesure plus récentes ont été reçues, **en ce que**

- les valeurs de mesure ou des informations dérivées de valeurs de mesure sont prises en compte à partir d'un nombre plus faible de cycles de mesure que pendant le fonctionnement normal et/ou
- au moins une valeur de mesure plus ancienne est munie d'un facteur de pondération inférieur par rapport au fonctionnement normal et/ou
- au moins une valeur de mesure plus récente est pourvue d'un facteur de pondération supérieur par rapport au mode de fonctionnement normal.

**2.** Procédé selon la revendication 1,
**caractérisé en ce que**

- le nombre de cycles de mesure et/ou
- les facteurs de pondération sont rapprochés graduellement, après le début du processus d'extrusion, du nombre utilisé pendant le fonctionnement normal et/ou des facteurs de pondération utilisés pendant le fonctionnement normal.

**Claims**

**1.** Method for controlling the thickness of extruded film, comprising the following method features:

- measuring the thickness profile of straight extruded film (8) by means of a thickness measuring probe (12), which is moved substantially transversely (x) to the transporting direction (z) of the extruded film (8) along the surface thereof and records for each measuring cycle a thickness profile of the film (8), at least over parts of the extent of the film (8) transversely (x) to the transporting direction (z) thereof,
- transmitting the measured values to a control unit (14, 15, 17),
- storing the measured values on which the thickness profiles are based in a memory unit (14),
- providing statistical values of the film thickness (5) by a computer device (14), the computer device (14) thereby taking into account measured values or information derived from measured values from a specific number of measuring cycles,
- determining the deviations in the statistical values of the film thickness (5) from a target value,
- generating control commands to means for influencing the film thickness (5),

**characterized in that**,
during a predetermined time period at the beginning of the extrusion process, when providing the statistical values, the computer device (14) takes into account the more recent measured value or values with a great weighting than the older measured values, which were recorded at an earlier point in time than the more recent measured values, than during normal operation, **in that**

• the measured values or information derived from measured values from a smaller number of measuring cycles is/are taken into account than during normal operation and/or
• at least one older measured value is provided with a smaller weighting factor than during normal operation and/or
• at least one more recent measured value is provided with a greater weighting factor than during normal operation.

**2.** Method according to Claim 1,
**characterized in that**
after the beginning of the extrusion process,

- the number of measuring cycles and/or
- the weighting factors

are progressively approximated to the number used during normal operation and/or the weighting factors used during normal operation.

**Fig. 1**

EP 1 585 625 B1

Fig. 2

EP 1 585 625 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1319492 A
- DE 4009982 A1